# EUROPÄISCHE PATENTANMELDUNG

(11) **EP 4 845 125 A1**
(43) Veröffentlichungstag der Anmeldung: **25.11.2026**
(21) Anmeldenummer: 25177238.0
(22) Anmeldetag: 19.05.2025
(51) Int. Cl.: H04L 67/12, H04W 4/70, H04L 7/00, B25F 5/00

(54) **VERFAHREN UND SYSTEM ZUM AKTUALISIEREN VON ZEITDATEN EINES ERSTEN IOT-GERÄTS EINER MOBILEN WERKZEUGMASCHINE**

(71) Anmelder: Hilti Aktiengesellschaft, 9494 Schaan (LI)
(72) Erfinder: Malik, Muhammad Salman, 86159 Augsburg (DE)
(74) Vertreter: Hilti Aktiengesellschaft Corporate Intellectual Property

(57) **Zusammenfassung**

Die vorliegende Erfindung betrifft ein Verfahren zum Aktualisieren von Zeitdaten eines ersten IoT-Geräts einer mobilen Werkzeugmaschine mittels eines Gateways oder eines zweiten IoT-Geräts der Werkzeugmaschine, das Verfahren auf-weisend die folgenden Schritte: Bereitstellen des ersten IoT-Geräts und des Gateways oder des ersten IoT-Geräts und des zweiten IoT-Geräts; Empfangen eines ersten IoT-Geräte-Beacons, das Zeitdaten des ersten IoT-Geräts umfasst, durch das Gateway oder das zweite IoT-Gerät oder Empfangen eines Gateway-Beacons, das Zeitdaten des Gateways umfasst, oder eines zweiten IoT-Geräte-Beacons, das Zeitdaten des zweiten IoT-Geräts umfasst, durch das erste IoT-Gerät; Vergleichen der Zeitdaten des ersten IoT-Geräts mit den Zeitdaten des Gateways oder den Zeitdaten des zweiten IoT-Geräts unter Verwendung eines Vergleichskriteriums, um festzustellen, ob eine Aktualisierung der Zeitdaten des ersten IoT-Geräts notwendig ist; und Aktualisieren der Zeitdaten des ersten IoT-Geräts unter Verwendung der Zeitdaten des Gateways oder der Zeitdaten des zweiten loT-Geräts.

## Beschreibung

### GEBIET DER ERFINDUNG

Die vorliegende Erfindung betrifft ein Verfahren und ein System zum Aktualisieren von Zeitdaten eines ersten loT-Geräts einer mobilen Werkzeugmaschine mittels eines Gateways oder eines zweiten loT-Geräts der Werkzeugmaschine.

Die fortschreitende Digitalisierung in der industriellen Fertigung hat zur zunehmenden Integration von vernetzten Komponenten in Werkzeugmaschinen geführt. In diesem Zusammenhang spielen sogenannte loT-Geräte (Internet of Things) eine wesentliche Rolle, da sie eine kontinuierliche Datenerfassung, Zustandsüberwachung und/oder Prozessoptimierung ermöglichen. Diese loT-Geräte können beispielsweise als Sensoren, batteriebetriebene Module und/oder in Werkzeuge integrierte Einheiten ausgeführt sein, die verschiedene Maschinenparameter erfassen und/oder spezifische Bearbeitungsdaten liefern. Eine präzise Zeitsynchronisation bzw. Aktualisierung zwischen solchen loT-Geräten ist insbesondere dann von entscheidender Bedeutung, wenn zeitkritische Daten analysiert, Produktionsschritte koordiniert und/oder Zustände von Maschinenkomponenten nachverfolgt werden müssen.

Für die Zeitsynchronisation bzw. Zeitaktualisierung zwischen Computergeräten über das Internet oder ein lokales Netzwerk (LAN) stehen mehrere Standardprotokolle zur Verfügung. Beispiele hierfür sind das Network Time Protocol (NTP) und das Precision Time Protocol (PTP). Diese Standardprotokolle erfordern in der Regel eine Internet- oder LAN-Verbindung und verursachen einen gewissen Datenverkehr-Overhead.

In einer Umgebung mit loT-Komponenten, wie sie typischerweise in Werkzeugmaschinen vorzufinden sind, stellt dies jedoch eine Herausforderung dar. Die eingesetzten loT-Geräte sind oftmals nicht mit Mobilfunktechnologien wie LTE oder NB-loT ausgestattet und verfügen nicht über eine (permanente) Internetverbindung. In vielen Fällen besteht auch keine Verbindung zu einem lokalen Netzwerk, etwa über WLAN oder ein Gateway mit Internetanbindung. Hinzu kommt, dass diese loT-Geräte häufig auf einen stromsparenden Betrieb hin optimiert sind, sei es aus Gründen der Energieeffizienz oder aufgrund der Verwendung von Batterien als Energiequelle.

Der Einsatz konventioneller Synchronisationsprotokolle ist daher für diese Anwendungen häufig nicht machbar oder nicht wünschenswert.

Vor diesem Hintergrund stellt sich die technische Herausforderung, eine geeignete Lösung für die Zeitsynchronisation in einem solchen energie- und verbindungssensitiven Umfeld zu schaffen.

Konkret ist es daher eine Aufgabe der vorliegenden Erfindung, ein verbessertes Verfahren zum Aktualisieren von Zeitdaten eines loT-Geräts einer mobilen Werkzeugmaschine bereitzustellen. Ferner ist es eine Aufgabe der vorliegenden Erfindung, ein System zum Aktualisieren von Zeitdaten eines loT-Geräts einer mobilen Werkzeugmaschine bereitzustellen.

### OFFENBARUNG DER ERFINDUNG

Demgemäß wird ein Verfahren zum Aktualisieren von Zeitdaten eines ersten loT-Geräts einer mobilen Werkzeugmaschine mittels eines Gateways oder eines zweiten loT-Geräts der Werkzeugmaschine vorgeschlagen, das die folgenden Schritte aufweist:
Bereitstellen des ersten loT-Geräts und des Gateways oder des ersten loT-Geräts und des zweiten loT-Geräts;
Empfangen eines ersten loT-Geräte-Beacons, das Zeitdaten des ersten loT-Geräts umfasst, durch das Gateway oder das zweite loT-Gerät oder Empfangen eines Gateway-Beacons, das Zeitdaten des Gateways umfasst, oder eines zweiten loT-Geräte-Beacons, das Zeitdaten des zweiten loT-Geräts umfasst, durch das erste loT-Gerät;
Vergleichen der Zeitdaten des ersten loT-Geräts mit den Zeitdaten des Gateways oder den Zeitdaten des zweiten loT-Gerätes unter Verwendung eines Vergleichskriteriums, um festzustellen, ob eine Aktualisierung der Zeitdaten des ersten loT-Geräts notwendig ist; und
Aktualisieren der Zeitdaten des ersten loT-Geräts unter Verwendung der Zeitdaten des Gateways oder der Zeitdaten des zweiten loT-Geräts.

Weiterhin wird ein System zum Aktualisieren von Zeitdaten eines ersten loT-Geräts einer mobilen Werkzeugmaschine mittels eines Gateways oder eines zweiten loT-Geräts der Werkzeugmaschine vorgeschlagen, wobei das System das erste loT-Gerät der mobilen Werkzeugmaschine und das Gateway oder das zweite loT-Gerät aufweist, wobei das Gateway oder das zweite loT-Gerät dazu ausgebildet ist, ein erstes loT-Geräte-Beacon, das Zeitdaten des ersten loT-Geräts umfasst, zu empfangen, oder wobei das erste loT-Gerät dazu ausgebildet ist, ein Gateway-Beacon, das Zeitdaten des Gateways umfasst, oder ein zweites loT-Geräte-Beacon, das Zeitdaten des zweiten loT-Geräts umfasst, zu empfangen; wobei das erste loT-Gerät oder das Gateway dazu ausgebildet ist, die Zeitdaten des ersten loT-Geräts mit den Zeitdaten des Gateways unter Verwendung eines Vergleichskriteriums zu vergleichen, um festzustellen, ob eine Aktualisierung der Zeitdaten des ersten loT-Geräts notwendig ist, oder wobei das erste loT-Gerät oder das zweite loT-Gerät dazu ausgebildet ist, die Zeitdaten des ersten loT-Geräts mit den Zeitdaten des zweiten loT-Gerätes unter Verwendung eines Vergleichskriteriums zu vergleichen, um festzustellen, ob eine Aktualisierung der Zeitdaten des ersten loT-Geräts notwendig ist; wobei das erste loT-Gerät dazu ausgebildet ist, die Zeitdaten des ersten loT-Geräts unter Verwendung der Zeitdaten des Gateways oder der Zeitdaten des zweiten loT-Geräts zu aktualisieren, oder wobei das Gateway dazu ausgebildet ist, die Zeitdaten des ersten loT-Geräts unter Verwendung der Zeitdaten des Gateways zu aktualisieren. Das erste und/oder das zweite loT-Gerät kann vorzugsweise als die mobile Werkzeugmaschine selbst und/oder aber zumindest als eine Komponente einer solchen mobilen Werkzeugmaschine ausgebildet sein. Somit ist die mobile Werkzeugmaschine vorliegend auch von dem System umfasst bzw. kann einen Bestandteil eines solchen Systems ausbilden.

Ein loT-Gerät einer mobilen Werkzeugmaschine ist vorzugsweise eine elektronische Komponente innerhalb oder in Verbindung mit der Werkzeugmaschine oder die Werkzeugmaschine selbst, die Daten wie Betriebszustände, Messwerte oder Umweltbedingungen erfasst und zur Verarbeitung und/oder Kommunikation bereitstellt. Vorzugsweise ist das loT-Gerät energieeffizient ausgelegt, beispielsweise batteriebetrieben, und kann autonom oder vernetzt betrieben werden.

In der betrachteten Anwendung erfolgt vorzugsweise das Empfangen eines ersten loT-Geräte-Beacons, das Zeitdaten des ersten loT-Geräts umfasst, durch das Gateway oder ein zweites loT-Gerät vorzugsweise sowohl über drahtlose als auch drahtgebundene Verbindungen. Vorzugsweise kann auch ein Gateway-Beacon mit Zeitdaten des Gateways oder ein Beacon eines zweiten loT-Geräts übermittelt werden, welches das erste loT-Gerät empfängt, wobei auch hier vorzugsweise beide Kommunikationsarten berücksichtigt werden. Dies ermöglicht vorzugsweise eine flexible Zeitsynchronisation, beispielsweise wenn ein Werkzeug über eine kabelgebundene Verbindung mit einer Batterie gekoppelt ist oder wenn die Batterie ihre Zeitdaten vorzugsweise beim Laden drahtlos oder kabelgebunden vom Gateway erhält.

Ein Gateway ist vorzugsweise eine Vermittlungseinheit, die als Kommunikationsschnittstelle zwischen einem oder mehreren loT-Geräten und einem externen Netzwerk, wie etwa dem Internet, fungiert. Vorzugsweise ist das Gateway mit Speicher- und Rechenressourcen ausgestattet, um Daten zu puffern, zu verarbeiten oder weiterzuleiten.

Das Vergleichskriterium kann beispielsweise einen Zeitschwellenwert aufweisen. Wenn die Uhrzeit des ersten loT-Geräts beispielsweise nicht synchron mit der Uhrzeit des Gateways oder des zweiten loT-Geräts oder höher oder deutlich niedriger ist oder die Differenz der Uhrzeiten einen bestimmten Schwellenwert überschreitet, z. B. wenn die Differenz weniger oder mehr als 30 Sekunden beträgt, wir ermittelt, dass eine Aktualisierung erforderlich ist. Der Schwellenwert kann auf dem Gateway oder dem zweiten loT-Gerät definiert werden.

Ein loT-Geräte-Beacon ist vorzugsweise ein Signal, das ein loT-Gerät periodisch oder ereignisbasiert aussendet, um Informationen wie Identität und Zeitdaten zu übermitteln. Vorzugsweise dient der Beacon dazu, eine drahtlose, energiearme Kommunikation mit einem Gateway oder anderen loT-Geräten zu ermöglichen.

Ein Gateway-Beacon ist vorzugsweise ein Signal, das vom Gateway ausgesendet wird, um loT-Geräte in der Umgebung über dessen Anwesenheit und/oder Zeitdaten zu informieren. Vorzugsweise ermöglicht der Beacon den angeschlossenen loT-Geräten eine Synchronisation und/oder Konfiguration basierend auf dem Gateway-Zeitstempel.

Zeitdaten sind vorzugsweise digitale Informationen, die eine bestimmte Uhrzeit oder ein Zeitintervall repräsentieren und in einem definierten Format übertragen werden. Vorzugsweise dienen sie der Synchronisation von Vorgängen oder der zeitlichen Einordnung von Mess-und Ereignisdaten innerhalb eines verteilten Systems.

Das Vergleichen der Zeitdaten umfasst vorzugsweise eine Analyse der Abweichung zwischen den übermittelten Zeitwerten zweier Geräte anhand eines vordefinierten Maßstabs, wie beispielsweise einer maximal tolerierten Zeitdifferenz. Vorzugsweise wird das Vergleichskriterium genutzt, um zu entscheiden, ob eine Synchronisationsmaßnahme erforderlich ist oder ein bestimmter Funktionszustand ausgelöst werden soll.

Die mobile Werkzeugmaschine kann ein handgeführtes Elektrowerkzeug bzw. eine Handwerkzeugmaschine, beispielsweise eine Bohrmaschine, eine Schraubmaschine, eine Meißelmaschine, eine Schleifmaschine, eine Sägemaschine oder dergleichen sein. Denkbar ist auch, dass die mobile Werkzeugmaschine ein Bauroboter ist oder einen Bauroboter hat. Die mobile Werkzeugmaschine kann einen Manipulator, insbesondere einen mehrachsigen Manipulator, aufweisen. Die mobile Werkzeugmaschine kann eine Antriebsvorrichtung zum Antrieb eines Werkzeugs, beispielsweise eines Bohrers, eines Meißels, eines Saugers oder dergleichen aufweisen.

Die mobile Werkzeugmaschine kann beispielsweise zur Bearbeitung von Stein, wie Beton, und/oder Metall und/oder Holz eingerichtet sein. Sie kann beispielsweise zum Bohren, Meißeln, Sägen und / oder Schleifen ausgebildet sein.

Allgemein kann die mobile Werkzeugmaschine zur Ausführung von Arbeiten im Hoch- und/oder Tiefbau eingerichtet sein. Denkbar ist, dass sie nicht für einen Einsatz im Bergbau eingerichtet ist.

Die mobile Werkzeugmaschine kann tragbar sein; sie kann beispielsweise ein Gewicht von weniger als 50 kg, insbesondere von weniger als 25 kg, aufweisen.

Die Erfindung beschreibt insbesondere ein Verfahren zur Zeitsynchronisation auf loT-Geräten mit eingeschränkter Konnektivität. Dabei wird eine Methode zur Zeitsynchronisierung bzw. Zeitaktualisierung vorgeschlagen, bei denen loT-Geräte und/oder ein Gateway Rundfunksignale oder Beacons verwenden, um sich gegenseitig zu finden und die interne Uhr des mindestens ersten loT-Gerät zu aktualisieren und/oder zu synchronisieren. In verschiedenen Ausführungsformen wird auch ein System betrachtet, das loT-Geräte und mindestens ein Gateway umfasst. Diese loT-Geräte verfügen vorzugsweise über keine permanente Internet- und/oder LAN-Verbindung und senden IoT-Geräte-Beacon-Signale. Diese IoT-Geräte-Beacons können von einem oder mehreren Gateways oder auch von einem anderen loT-Gerät erfasst werden, die bzw. das sich in der Reichweite zu dem sendenden loT-Gerät befinden. Beispielsweise können loT-Geräte und Gateways Bluetooth-LE verwenden, wobei diese loT-Geräte insbesondere Bluetooth-LE-Anzeigen übertragen, die von mindestens einem Gateway oder einem anderen loT-Gerät erfasst werden können. Bluetooth-LE (Low Energy) ist vorzugsweise ein drahtloses Kommunikationsprotokoll, das für energieeffiziente Datenübertragung über kurze Distanzen optimiert ist und insbesondere für den Einsatz in loT-Geräten entwickelt wurde. Vorzugsweise ermöglicht Bluetooth-LE eine intermittierende, stromsparende Verbindung zwischen mobilen Werkzeugmaschinen und anderen Geräten wie Gateways oder Sensoren. Es ist ferner möglich, dass loT-Geräte mobil sind und sich an einen Ort bewegen, an dem ihre Beacons von keinem der Gateways oder keinem anderen loT-Gerät erfasst werden können.

Ein praxisnahes Szenario für die Umsetzung einer solchen Zeitsynchronisation besteht darin, dass ein zentrales Gateway die Uhrzeit eines batteriebetriebenen loT-Geräts aktualisiert, beispielsweise beim Ladevorgang oder über andere etablierte Verfahren. Wird diese Batterie anschließend mit einem Werkzeug verbunden, etwa mechanisch oder drahtlos, kann die aktualisierte Uhrzeit entweder aktiv auf das Werkzeug übertragen oder vom Werkzeug selbst über eine Abfrage der Batteriezeit übernommen werden. Auf diese Weise lässt sich sicherstellen, dass auch Werkzeuge, die nicht permanent mit einem Netzwerk verbunden sind, eine verlässliche Zeitbasis erhalten und damit zur zeitlich konsistenten Erfassung und Analyse von Prozessdaten beitragen.

In einem weiteren Aspekt wird vorgeschlagen, dass die Zeitdaten des ersten loT-Geräts und/oder des zweiten loT-Geräts eine aktuelle Echtzeituhrzeit des ersten bzw. zweiten loT-Geräts und/oder eine auf dem ersten bzw. zweiten loT-Gerät konfigurierte lokale Zeitzoneninformation aufweisen, und/oder wobei die Zeitdaten des Gateways eine globale Echtzeituhrzeit und/oder eine durch das Gateway bezogene lokale Zeitzoneninformation aufweisen.

Die Zeitdaten des jeweiligen loT-Geräts weisen vorzugsweise eine aktuelle Echtzeit-Uhrzeit auf, die lokal im loT-Gerät ermittelt oder gespeichert wird, und/oder eine auf dem loT-Gerät konfigurierte lokale Zeitzoneninformation. Das jeweilige loT-Gerät umfasst vorzugsweise Zeitdaten in seinen Beacons. Diese Zeitdaten sind vorzugsweise die aktuelle Echtzeituhr auf dem jeweiligen loT-Gerät und/oder die lokale Zeitzone (ggf. mit Abweichung von der UTC-Zeit), die auf dem jeweiligen loT-Gerät konfiguriert ist. Diese Zeitdaten könnten auch auf einige Standardwerte gesetzt sein, die anzeigen, dass die Uhr auf diesem loT-Gerät noch nicht bzw. noch nie eingestellt wurde. Vorzugsweise enthalten die Zeitdaten des Gateways eine global bezogene Echtzeit-Uhrzeit, beispielsweise über eine Netzwerksynchronisation, und/oder eine vom Gateway verwaltete lokale Zeitzoneninformation, die für eine standardisierte Synchronisation mehrerer Geräte genutzt werden kann.

In einem weiteren Aspekt wird vorgeschlagen, dass das Gateway eine permanente oder zumindest temporäre Internetverbindung aufweist, und wobei die Zeitdaten des Gateways unter Verwendung der Internetverbindung mittels eines Standardprotokolls mit einer externen Zeitquelle synchronisiert werden.

Vorzugsweise verfügt das mindestens eine Gateway über eine permanente Internetverbindung und verwendet Standardprotokolle, wie NTP, um ihre eigene Zeit mit dem Internet zu synchronisieren. Das mindestens eine Gateway kann auch mit einer cloudbasierten Plattform verbunden sein und Daten und/oder andere Informationen über mindestens das erste loT-Gerät sammeln.

In einem weiteren Aspekt wird vorgeschlagen, dass das Vergleichen der Zeitdaten des ersten loT-Geräts mit den Zeitdaten des Gateways oder den Zeitdaten des zweiten loT-Gerätes aufweist:
Vergleichen, durch das Gateway, der mittels des ersten loT-Geräte-Beacons durch das Gateway empfangenen Zeitdaten des ersten loT-Geräts mit den Zeitdaten des Gateways unter Verwendung des Vergleichskriteriums; oder
Vergleichen, durch das zweite loT-Gerät, der mittels des ersten loT-Geräte-Beacons durch das zweite loT-Gerät empfangenen Zeitdaten des ersten loT-Geräts mit den Zeitdaten des zweiten loT-Geräts unter Verwendung des Vergleichskriteriums; oder
Vergleichen, durch das erste loT-Gerät, der mittels des Gateway-Beacons von dem ersten loT-Gerät empfangenen Zeitdaten des Gateways mit den Zeitdaten des ersten loT-Geräts unter Verwendung des Vergleichskriteriums; oder
Vergleichen, durch das erste loT-Gerät, der mittels des zweiten loT-Geräte-Beacons von dem ersten loT-Gerät empfangenen Zeitdaten des zweiten loT-Geräts mit den Zeitdaten des ersten loT-Geräts unter Verwendung des Vergleichskriteriums.

Wenn beispielsweise das Gateway einen der ersten loT-Geräte-Beacons empfängt, kann es die darin umfassten Zeitdaten verarbeiten, um zu entscheiden, ob das erste loT-Gerät eine Zeitsynchronisierung bzw. Zeitaktualisierung benötigt oder nicht. Das Gateway vergleicht vorzugsweise die in dem ersten loT-Geräte-Beacon umfassten Zeitdaten mit seiner eigenen internen Uhr und/oder Zeitzone, um zu entscheiden, ob das erste loT-Gerät seine Uhr aktualisieren muss oder nicht.

Wenn beispielsweise das zweite loT-Gerät einen der ersten loT-Geräte-Beacons empfängt, kann es die darin umfassten Zeitdaten verarbeiten, um zu entscheiden, ob das erste loT-Gerät eine Zeitsynchronisierung bzw. Zeitaktualisierung benötigt oder nicht. Das zweite loT-Gerät vergleicht vorzugsweise die in dem ersten loT-Geräte-Beacon umfassten Zeitdaten mit seiner eigenen internen Uhr und/oder Zeitzone, um zu entscheiden, ob das erste loT-Gerät seine Uhr aktualisieren muss oder nicht.

Wenn beispielsweise das erste loT-Gerät einen der Gateway-Beacons empfängt, kann es die darin umfassten Zeitdaten verarbeiten, um zu entscheiden, ob es eine Zeitsynchronisierung bzw. Zeitaktualisierung benötigt oder nicht. Das erste loT-Gerät vergleicht dazu vorzugsweise die in dem Gateway-Beacon umfassten Zeitdaten mit seiner eigenen internen Uhr und/oder Zeitzone, um zu entscheiden, ob es seine Uhr aktualisieren muss oder nicht.

Wenn beispielsweise das erste loT-Gerät einen der zweiten loT-Geräte-Beacons empfängt, kann es die darin umfassten Zeitdaten des zweiten loT-Geräts verarbeiten, um zu entscheiden, ob es eine Zeitsynchronisierung bzw. Zeitaktualisierung benötigt oder nicht. Das erste loT-Gerät vergleicht dazu vorzugsweise die in dem zweiten loT-Geräte-Beacon umfassten Zeitdaten mit seiner eigenen internen Uhr und/oder Zeitzone, um zu entscheiden, ob es seine Uhr aktualisieren muss oder nicht.

In einem weiteren Aspekt wird vorgeschlagen, dass das Aktualisieren der Zeitdaten des ersten loT-Geräts durch das erste loT-Gerät unter Verwendung der durch das Gateway-Beacon von dem ersten loT-Gerät empfangenen Zeitdaten des Gateways durchgeführt wird, oder wobei das Aktualisieren der Zeitdaten des ersten loT-Geräts durch das erste loT-Gerät unter Verwendung der durch das zweite loT-Geräte-Beacon von dem ersten loT-Gerät empfangenen Zeitdaten des zweiten loT-Geräts durchgeführt wird.

Das Gateway kann regelmäßig Gateway-Beacons senden, die seine eigenen Zeitdaten umfassen. Erste loT-Geräte, die sich in Reichweite dieses Gateways befinden, können die Gateway-Zeitdaten in diesen Beacons verwenden, um ihre Zeitdaten zu aktualisieren. Das zweite loT-Gerät kann regelmäßig zweite loT-Geräte-Beacons senden, die seine eigenen Zeitdaten umfassen. Erste loT-Geräte, die sich in Reichweite dieses zweiten loT-Geräts befinden, können die Zeitdaten in diesen Beacons verwenden, um ihre Zeitdaten zu aktualisieren. Falls ein erstes loT-Gerät Zeitdaten von mehreren Gateways oder mehreren zweiten loT-Geräten mit geringfügigen Unterschieden empfängt, kann das erste loT-Gerät beim Einstellen bzw. Aktualisieren seiner Uhrzeit ggf. eine zusätzliche Logik anwenden, z. B. eine Mittelwertbildung. In diesem Fall ist es vorteilhaft, wenn die ersten loT-Geräte ihren Funkempfänger im eingeschalteten Zustand halten, um die Beacons von Gateways oder zweiten loT-Geräten zu empfangen.

Ferner ist es möglich, dass das erste loT-Gerät nicht immer die neuesten Zeitdaten des Gateways oder des zweiten loT-Geräts benötigt. In einem solchen Fall kann eine Strategie implementiert werden, um beispielsweise eine gewisse Zeitabweichung zu akzeptieren. In einem solchen Fall kann ein Funkempfänger des ersten loT-Geräts nur in den eingeschalteten Zustand versetzt werden, um die Gateway-Beacons oder die zweiten loT-Geräte-Beacons regelmäßig oder bei Bedarf abzuhören. In einem solchen Fall sollte das Gateway oder das zweite loT-Gerät eine gewisse Bandbreite reservieren, um die entsprechenden Beacons regelmäßig zu senden.

Es kann auch eine Strategie implementiert sein, bei der das erste loT-Gerät seine neuesten Zeitdaten in die ersten loT-Geräte-Beacons aufnimmt. Das Gateway oder das zweite loT-Gerät kann diese Zeitdaten mit seinen eigenen Zeitdaten vergleichen, um zu entscheiden, ob das erste loT-Gerät seine Zeitdaten aktualisieren muss. Wenn das Gateway oder das zweite loT-Gerät entscheidet, dass das erste loT-Gerät seine Zeitdaten aktualisieren muss, kann das Gateway oder das zweite loT-Gerät seine respektiven Beacons umfassend die eigenen Zeitdaten an das erste loT-Gerät übertragen. Das erste loT-Gerät kann seine Zeitdaten mithilfe dieser Gateway-Beacons oder der zweiten loT-Geräte-Beacons aktualisieren und anschließend seine aktualisierten Zeitdaten in seinen ersten loT-Geräte-Beacons aufnehmen. Wenn das Gateway oder das zweite loT-Gerät dann erkennt, dass kein anderes erstes loT-Gerät seine Zeitdaten aktualisieren muss, kann das Gateway oder das zweite loT-Gerät darauffolgend das Senden seiner Beacons einstellen.

Das Gateway oder das zweite loT-Gerät kann auch nur dann seine entsprechenden Beacons senden, wenn es erkennt, dass ein erstes loT-Gerät in seiner Reichweite ist, und ggf. eine Zeitaktualisierung benötigt.

In einem weiteren Aspekt wird vorgeschlagen, dass zum Aktualisieren der Zeitdaten des ersten loT-Geräts eine zumindest temporäre, drahtlose Verbindung zwischen dem Gateway und dem ersten loT-Gerät hergestellt wird, und wobei das Aktualisieren der Zeitdaten des ersten loT-Geräts durch das Gateway unter Verwendung der Zeitdaten des Gateways durch Nutzung der zumindest temporären, drahtlosen Verbindung durchgeführt wird.

Auf der Grundlage der jeweiligen Entscheidung, ob eine Aktualisierung der Zeitdaten des ersten loT-Geräts notwendig ist, kann sich das Gateway mit dem ersten loT-Gerät verbinden, um dessen Uhr zu aktualisieren. Wenn beispielsweise erste loT-Geräte und Gateways die Bluetooth-LE-Technologie verwenden, um Beacons zu übertragen, kann das Gateway eine Bluetooth-LE-Verbindung mit dem loT-Gerät herstellen und dessen Uhr aktualisieren.

In einem weiteren Aspekt wird vorgeschlagen, dass die zumindest temporäre, drahtlose Verbindung zwischen dem Gateway und dem ersten loT-Gerät nach dem Aktualisieren der Zeitdaten des ersten loT-Geräts getrennt wird.

Sobald das Gateway die Uhrzeit auf dem loT-Gerät aktualisiert hat, kann es die Verbindung trennen.

In einem weiteren Aspekt wird vorgeschlagen, dass das erste loT-Gerät Verbindungsstatus-Beacons sendet, die angeben, ob das erste loT-Gerät mit dem Gateway aktuell verbindbar oder nicht-verbindbar ist, und wobei das Aktualisieren der Zeitdaten des ersten loT-Geräts unter Verwendung der Zeitdaten des Gateways nur möglich ist, wenn ein Verbindungsstatus-Beacon angibt, dass das erste loT-Gerät aktuell mit dem Gateway verbindbar ist. Alternativ oder ergänzend wird vorgeschlagen, dass das erste loT-Gerät Verbindungsstatus-Beacons sendet, die angeben, ob das erste loT-Gerät mit dem zweiten loT-Gerät aktuell verbindbar oder nicht-verbindbar ist, und wobei das Aktualisieren der Zeitdaten des ersten loT-Geräts unter Verwendung der Zeitdaten des zweiten loT-Geräts nur möglich ist, wenn ein Verbindungsstatus-Beacon angibt, dass das erste loT-Gerät aktuell mit dem zweiten loT-Gerät verbindbar ist.

loT-Gerät Verbindungsstatus-Beacons können "nicht-verbindbar" Beacons und "verbindbar" Beacons umfassen. "nicht-verbindbar" Beacons geben an, dass das erste loT-Gerät zumindest temporär nicht über eine drahtlose Verbindung mit einem Gateway oder einem anderen loT-Gerät verbindbar ist. "verbindbar" Beacons geben an, dass das erste loT-Gerät zumindest temporär über eine drahtlose Verbindung mit einem Gateway oder einem anderen loT-Gerät verbindbar ist.

Es wird in einigen Fällen davon ausgegangen, dass das erste loT-Gerät immer mit dem Gateway oder dem zweiten loT-Gerät verbunden werden kann. Das bedeutet aber, dass ein beispielhaft verwendeter Funkempfänger des ersten loT-Geräts stets eingeschaltet bleiben muss, um Verbindungsanfragen von einem Gateway oder einem zweiten loT-Gerät zu empfangen. Wenn das Gateway oder das zweite loT-Gerät einen Beacon mit Zeitdaten vom ersten loT-Gerät empfängt, kann es sich mit dem ersten loT-Gerät verbinden, um seine Zeit zu aktualisieren. Dies ist jedoch bei loT-Geräten mit geringer Leistung nicht ohne weiteres wünschenswert, da die stetige Erreichbarkeit mit Energiekonsum verbunden ist.

Daher wird vorliegend auch vorgeschlagen, dass das erste loT-Gerät nur für eine kurze Zeitspanne verbunden bleibt, die ausreicht, um dem Gateway oder dem zweiten loT-Gerät genügend Zeit zu geben, sich mit dem ersten loT-Gerät zu verbinden, um die Zeit des ersten loT-Geräts zu aktualisieren. Das erste loT-Gerät kann die Zeiträume, in denen es "nicht verbindbar" und "verbindbar" Beacons sendet, ggf. miteinander verschachteln, d. h. standardmäßig sendet das erste loT-Gerät "nicht-verbindbar" Beacons und zeitweise, d.h., für einen bestimmten Zeitraum, kann es "verbindbar" Beacons senden. Sobald das Gateway oder das zweite loT-Gerät eine Verbindung zu dem ersten loT-Gerät hergestellt bzw. herstellen kann und die Uhrzeit auf dem ersten loT-Gerät aktualisiert hat, kann es die Verbindung zum ersten loT-Gerät trennen. Das erste loT-Gerät kann dann auch wieder "nicht-verbindbar" Beacons senden, nachdem seine Uhr aktualisiert wurde. Für den Fall, dass das erste loT-Gerät und das Gateway oder das zweite loT-Gerät die Bluetooth-LE-Technologie verwenden, kann das erste loT-Gerät "nicht-verbindbar und "verbindbar" Bluetooth-LE-Anzeigen senden. Das Gateway oder das zweite loT-Gerät können sich nur mit dem ersten loT-Gerät verbinden, wenn es eine "verbindbar" Bluetooth-LE-Anzeige empfängt.

In einem weiteren Aspekt wird vorgeschlagen, dass die Verbindungsstatus-Beacons von dem ersten loT-Gerät fortlaufend oder wiederkehrend oder intervallweise oder periodisch oder gemäß einem vorbestimmten Zeitraum oder gemäß einer Jahreszeit oder gemäß einer Umgebungstemperatur gesendet werden.

Vorzugsweise sendet das erste loT-Gerät seine Verbindungsstatus-Beacons fortlaufend, wobei fortlaufend bedeutet, dass die Beacons ohne Unterbrechung in kurzen Zeitabständen ausgesendet werden, was eine hohe Verfügbarkeit für die Kopplung mit einem Gateway ermöglicht. Vorzugsweise kann das loT-Gerät die Beacons auch wiederkehrend senden, das heißt, nach einem bestimmten Muster oder Rhythmus, wodurch eine Balance zwischen Energieverbrauch und Verbindbarkeit erzielt wird. Intervallweises Senden erfolgt vorzugsweise nach festen, einstellbaren Zeitabständen, was eine gezielte Energieeinsparung erlaubt, insbesondere bei batteriebetriebenen Geräten. Periodisch bedeutet vorzugsweise, dass die Beacons nach einem regelmäßigen Zeitplan ausgesendet werden, beispielsweise alle 10 Minuten, was die Vorhersagbarkeit des Verhaltens für Gateways erhöht. Vorzugsweise kann auch ein vorbestimmter Zeitraum definiert sein, zu dem das loT-Gerät die Beacons aktiv versendet, was insbesondere bei zeitlich gesteuerten Anwendungen, etwa im Produktionszyklus, von Vorteil ist.

Darüber hinaus kann das loT-Gerät vorzugsweise seine Beacon-Sendefrequenz abhängig von der Jahreszeit anpassen, wobei jahreszeitlich bedingte Temperaturänderungen die Taktfrequenz von Kristalloszillatoren beeinflussen können. Kristalloszillatoren sind vorzugsweise temperaturabhängige Taktgeber, die in elektronischen Geräten zur Zeitmessung eingesetzt werden, deren Genauigkeit jedoch bei extremen Temperaturen abweichen kann. Deshalb kann das loT-Gerät vorzugsweise bei niedrigeren Temperaturen häufiger Beacon-Signale aussenden, um Zeitabweichungen besser zu kompensieren. Auch eine Anpassung an die Umgebungstemperatur ist vorzugsweise möglich, sodass bei stark schwankenden Temperaturen eine höhere Beacon-Frequenz zur Erhöhung der Synchronisationsgenauigkeit verwendet wird.

Ein technischer Vorteil dieser anpassbaren Beacon-Strategien besteht vorzugsweise darin, dass eine zuverlässige Verbindung zwischen Gateway und loT-Gerät nur dann erfolgt, wenn das Gateway verbindbare Beacons empfängt, wodurch unnötige Verbindungsversuche und Energieverschwendung vermieden werden. Vorzugsweise erhöht sich dadurch die Lebensdauer von Akkumulatoren und die Robustheit der Kommunikation in energie- und verbindungssensitiven Umgebungen.

In einem weiteren Aspekt wird vorgeschlagen, dass die Verbindungsstatus-Beacons die Zeitdaten des ersten loT-Geräts aufweisen.

Es kann für das erste loT-Gerät optional sein, Zeitdaten in "nicht-verbindbar" Beacons aufzunehmen. Besonders bevorzugt umfassen "verbindbar" Beacons stets die Zeitdaten. In einigen Ausführungen kann das Gateway oder das zweite loT-Gerät nur Zeitdaten verwenden, die in "verbindbar" Beacons umfasst sind, um zu entscheiden, ob das erste loT-Gerät eine Zeitaktualisierung benötigt oder nicht. Alternativ kann das Gateway oder das zweite loT-Gerät auch Zeitdaten, die in "nicht-verbindbar" Beacons umfasst sind, verarbeiten, um derart beispielsweise mehr Informationen über die Entwicklung der Uhrzeit des ersten loT-Geräts zu sammeln. Diese Informationen können beispielsweise verwendet werden, um die Zeit genauer einzustellen, wenn das erste loT-Gerät schließlich "verbindbar" Beacons sendet.

Wenn beispielsweise die Uhr auf dem ersten loT-Gerät schneller als die Gateway-Uhr oder die Uhr des zweiten loT-Geräts läuft, aktualisiert das Gateway oder das zweite loT-Gerät die Uhr des ersten loT-Geräts möglicherweise nicht sofort auf die Uhrzeit des Gateways oder des zweiten loT-Geräts. Ein Grund dafür kann sein, dass das erste loT-Gerät seine Zeit auch in seine Nachrichten an eine Cloud einbeziehen und ein sofortiges Zurücksetzen seiner Uhr auf die Gateway-Zeit (ältere Zeit) oder die Zeit des zweiten loT-Geräts dazu führen kann, dass die Nachrichten des ersten loT-Geräts in der Cloud neu geordnet oder gelöscht werden. Um dies zu vermeiden, kann das Gateway oder das zweite loT-Gerät die Zeitdaten, die es von "nicht-verbindbar" und "verbindbar" Beacons gesammelt hat, verwenden, um zusätzliche Informationen an das erste loT-Gerät zu senden. Dadurch wird ein Mechanismus geschaffen, um die Uhrzeit des ersten loT-Geräts mit der Uhrzeit des Gateways oder des zweiten loT-Geräts in Einklang zu bringen. Das Gateway oder das zweite loT-Gerät kann dem ersten loT-Gerät Informationen zur Verfügung stellen, mit denen es seine innere Uhr kontinuierlich in kleinen Schritten neu konfigurieren und eine Verlangsamung simulieren kann, um sie nach einer bestimmten Zeit auf die gleiche projizierte Zeit wie die Uhr des Gateways oder des zweiten loT-Geräts zu bringen.

In einem weiteren Aspekt wird vorgeschlagen, dass die Aktualisierung der Zeitdaten des ersten loT-Geräts bei Vorhandensein von mehreren ersten loT-Geräten gemäß einem Priorisierungskriterium durchgeführt werden, insbesondere wenn die mehreren ersten loT-Geräte zeitgleich zu aktualisieren sind.

Es ist möglich, dass auch mehrere erste loT-Geräte gleichzeitig eine Zeitsynchronisierung bzw. Zeitaktualisierung benötigen. Wenn die mehreren ersten loT-Geräte jeweils nur für einen bestimmten Zeitraum mit dem Gateway oder dem zweiten loT-Gerät verbunden werden können, weiß das Gateway oder das zweite loT-Gerät nicht trivial, welches der ersten loT-Geräte es priorisieren soll. Grundsätzlich kann sich das Gateway oder das zweite loT-Gerät mit demjenigen der ersten loT-Geräte verbinden, das als Erstes einen Beacon sendet und nach dem Vergleich eine Zeitaktualisierung benötigt (First-come-First-serve). Diese Strategie kann sich jedoch negativ auf die Scanleistung des Gateways oder des zweiten loT-Geräts auswirken. Es kann daher vorteilhafter sein, wenn das Gateway oder das zweite loT-Gerät weitere Informationen über die mehreren ersten loT-Geräte sammelt, die jeweils eine Zeitaktualisierung benötigen, und seine Verbindungen mit den mehreren ersten loT-Geräten plant. Das Gateway oder das zweite loT-Gerät kann auch zufällig eines der ersten loT-Geräte auswählen, das eine Zeitaktualisierung benötigt, und sich mit diesem verbinden.

In einem weiteren Aspekt wird vorgeschlagen, dass das Priorisierungskriterium auf Basis eines Zeitdifferenzabgleichs zwischen den mehreren ersten loT-Geräten und dem Gateway oder den mehreren ersten loT-Geräten und dem zweiten loT-Gerät, oder auf Basis einer jeweils verbleibenden Verbindungszeit der mehreren ersten loT-Geräte mit Gateway, oder auf Basis einer jeweils verbleibenden Verbindungszeit der mehreren ersten loT-Geräte mit dem zweiten loT-Gerät, oder auf Basis eines Received Signal Strength Indicators, der in den jeweiligen Verbindungsstatus-Beacons umfasst ist, erfolgt

Das Gateway oder das zweite loT-Gerät kann die Zeitdaten von loT-Geräten, die eine Zeitaktualisierung benötigen, mit seiner eigenen Zeit vergleichen, um seine Verbindungen zu priorisieren. Zum Beispiel kann aus einer Liste der ersten loT-Geräte, die eine Zeitaktualisierung benötigen, zuerst die Zeit auf dem Gerät aktualisiert werden, das die größte Zeitdifferenz zu der Uhrzeit des Gateways oder des zweiten loT-Geräts aufweist.

Eine Alternative kann darin bestehen, dass loT-Geräte die verbleibende Zeit, bis zu der sie verbunden bleiben können, in ihren jeweiligen Beacons angeben. Anstelle der verbleibenden Zeit können die ersten loT-Geräte auch einen Nachrichtenzähler umfassen, der die verbleibenden "verbindbar" Beacon-Intervalle angibt, in denen sie jeweils verbindungsfähig bleiben. Das Gateway oder das zweite loT-Gerät kann diese Informationen nutzen, um seine Verbindungen zu priorisieren. Beispielsweise kann sich das Gateway oder das zweite loT-Gerät aus der Liste der ersten loT-Geräte, die eine Zeitaktualisierung benötigen, zuerst mit demjenigen ersten loT-Gerät verbinden, das die geringste verbleibende Zeit für die Verbindung aufweist, und folglich zuerst die Zeit dieses ersten loT-Geräts aktualisieren.

Das Gateway oder das zweite loT-Gerät kann auch RSSI-Werte (Received Signal Strength Indicator) von ersten loT-Geräte-Beacons verwenden, um seine Verbindungen mit den ersten loT-Geräten zu priorisieren. Das Gateway oder das zweite loT-Gerät kann die ersten loT-Geräte nach ihrem RSSI priorisieren. Zum Beispiel wird aus der Liste der ersten loT-Geräte, die eine Zeitaktualisierung benötigen, zuerst die Zeit auf demjenigen ersten loT-Gerät aktualisiert, das dem Gateway oder dem zweiten loT-Gerät physisch am nächsten ist, also die kürzeste Distanz zu dem Gateway oder dem zweiten loT-Gerät aufweist. Das Gateway oder das zweite loT-Gerät kann auch eine Bewertung basierend auf RSSI und einer verbleibenden Zeit für die Verbindung ableiten, um seine Verbindungen zu priorisieren.

In einem weiteren Aspekt wird vorgeschlagen, dass das erste loT-Geräte-Beacon ein Flag aufweist, das anzeigt, dass das erste loT-Gerät die neuesten Zeitdaten des Gateways oder des zweiten loT-Geräts in seiner Umgebung benötigt.

Es kann bevorzugt sein, dass das erste loT-Gerät die aktuellste Zeit von allen verfügbaren Gateways oder zweiten loT-Geräten erhält und selbst entscheidet, ob es seine Uhrzeit aktualisieren muss oder nicht, insbesondere je nach erforderlicher Genauigkeit. In diesem Fall kann das erste loT-Gerät in seinen ersten loT-Geräte-Beacons ein Flag einfügen, das anzeigt, dass es die neuesten Zeitdaten von allen Gateways oder allen zweiten loT-Geräten in seiner Umgebung benötigt. Ein Gateway oder ein zweites loT-Gerät, das ein solches Beacon mit diesem Flag empfängt, kann eine der vorstehend genannten Methoden verwenden, um sich mit dem ersten loT-Gerät zu verbinden und ihm seine neuesten Zeitdaten zu übermitteln.

Es kann bevorzugt sein, dass das erste loT-Gerät ein Flag in seinen ersten IoT-Geräte-Beacons einfügt, das angibt, dass es neue Zeitdaten vom Gateway oder vom zweiten loT-Gerät benötigt. Wenn das Gateway oder das zweite loT-Gerät diese Flag erkennt, kann es beginnen, seine eigenen Beacons mit seinen eigenen Zeitdaten zu senden. Sobald das erste loT-Gerät seine Zeitdaten aktualisiert hat, kann die Flag aus dem ersten loT-Geräte-Beacon entfernt werden. Wenn das Gateway oder das zweite loT-Gerät feststellt, dass das erste loT-Gerät keine solche Flag in seinen ersten loT-Geräte-Beacons hat, kann es das Senden von entsprechenden Beacons an das erste loT-Gerät zumindest unterbrechen.

In einem weiteren Aspekt wird vorgeschlagen, dass das loT-Geräte-Beacon als Rundfunksignal oder wobei das Gateway Beacon als Rundfunksignal ausgebildet ist.

Vorzugsweise ist das loT-Geräte-Beacon als Rundfunksignal ausgebildet, was bedeutet, dass es drahtlos und ungerichtet in alle Richtungen innerhalb einer bestimmten Reichweite gesendet wird, ohne dass eine spezifische Zieladresse erforderlich ist. Ein Rundfunksignal ist vorzugsweise ein Signal, das von einem Sender gleichzeitig an mehrere potenzielle Empfänger in der Umgebung ausgestrahlt wird, wodurch eine einfache und energieeffiziente Möglichkeit zur Kontaktaufnahme mit Gateways oder anderen Geräten entsteht.

Ebenso kann vorzugsweise das Gateway-Beacon als Rundfunksignal ausgebildet sein, sodass auch das Gateway seine Präsenz, Zeitdaten oder Synchronisationsinformationen ungerichtet an alle sich in Reichweite befindenden loT-Geräte übermitteln kann. Der technische Vorteil dieser Gestaltung liegt vorzugsweise in der Reduzierung des Kommunikationsaufwands, da keine aktive Suche oder Adressierung erforderlich ist, was besonders in Umgebungen mit vielen energieoptimierten oder nur zeitweise aktiven loT-Geräten relevant ist.

Die für das vorgeschlagene Verfahren beschriebenen Ausführungsformen und Merkmale gelten für das vorgeschlagene System mit einer mobilen Werkzeugmaschine entsprechend und umgekehrt.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.

### KURZE BESCHREIBUNG DER FIGUREN

Die nachfolgende Beschreibung erläutert die Erfindung anhand von exemplarischen Ausführungsformen und Figuren. In den Figuren zeigt:
- Fig. 1: ein Ausführungsbeispiel einer mobilen Werkzeugmaschine;
- Fig. 2: ein schematisches Flussdiagramm eines übergeordneten Ausführungsbeispiels eines vorliegenden Verfahrens;
- Fig. 3: ein schematisches Ablaufdiagramm eines weiteren Ausführungsbeispiels eines vorliegenden Verfahrens;
- Fig. 4: ein schematisches Ablaufdiagramm eines weiteren Ausführungsbeispiels eines vorliegenden Verfahrens;
- Fig. 5: ein schematisches Ablaufdiagramm eines weiteren Ausführungsbeispiels eines vorliegenden Verfahrens;
- Fig. 6: ein schematisches Ablaufdiagramm eines weiteren Ausführungsbeispiels eines vorliegenden Verfahrens;
- Fig. 7: ein schematisches Ablaufdiagramm eines weiteren Ausführungsbeispiels eines vorliegenden Verfahrens;
- Fig. 8: ein schematisches Ablaufdiagramm eines weiteren Ausführungsbeispiels eines vorliegenden Verfahrens; und
- Fig. 9: ein schematisches Ablaufdiagramm eines weiteren Ausführungsbeispiels eines vorliegenden Verfahrens.

Gleiche oder funktionsgleiche Elemente werden durch gleiche Bezugszeichen in den Figuren indiziert, soweit nichts anderes angegeben ist.

### AUSFÜHRUNGSFORMEN DER ERFINDUNG

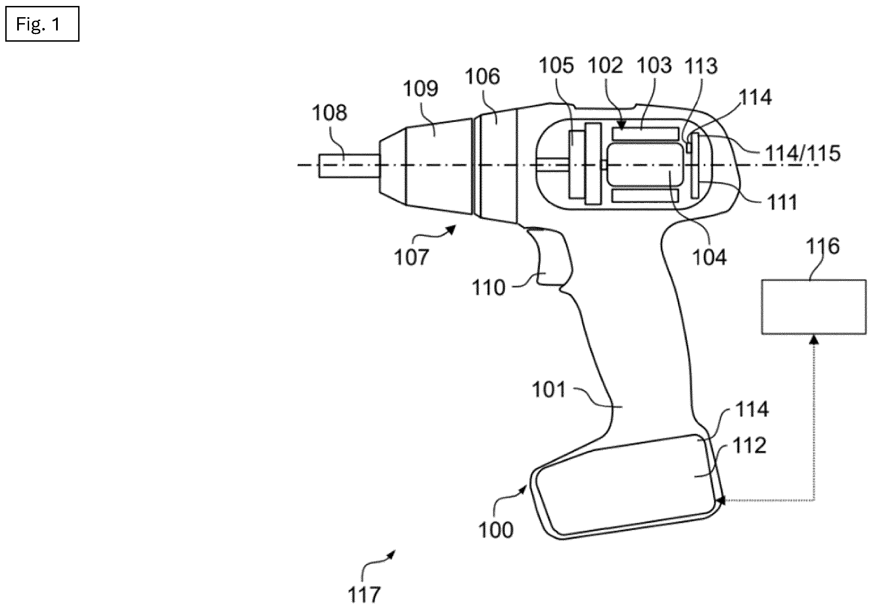

Die Fig. 1 zeigt eine mobile Werkzeugmaschine 100. Die Werkzeugmaschine 100 ist beispielhaft eine Handwerkzeugmaschine, genauer gesagt eine Bohrmaschine. Weitere bevorzugte Ausführungsformen umfassen eine Meißelmaschine, eine Schleifmaschine oder eine Sägemaschine. Die Werkzeugmaschine 100 hat ein Gehäuse 101 zum Schützen und Lagern weiterer Bauteile. Die Werkzeugmaschine 100 ist als tragbares Gerät ausgebildet. Sie weist beispielsweise ein Gewicht zwischen 0,5 und 15 kg und allgemein von weniger als 25 kg oder 50 kg auf.

Die Werkzugmaschine 100 hat einen Elektromotor 102, der einen Stator 103 und einen Rotor 104 hat. Der Rotor 104 ist beispielsweise über ein Getriebe 105 mit einer Spindel 106 einer Werkezugaufnahme 107 rotationsgekoppelt. Das Getriebe 105 ist beispielsweise ein Untersetzungsgetriebe. Es kann sein, dass das Getriebe 105 zwischen mehreren Übersetzungen schaltbar ist. Es kann sein, dass die Werkzeugmaschine 100 ein Schlagwerk enthält, das als Teil des Getriebes 105 oder der Werkzeugaufnahme 107 ausgeführt und/oder zwischen das Getriebe 105 und die Werkzeugaufnahme 107 geschaltet ist.

Die Werkzeugaufnahme 107 ist vorzugsweise zur Aufnahme eines wechselbaren Werkzeugs 108 konfiguriert. Beispielsweise kann durch ein Verdrehen eines Griffs 109 der Werkzeugaufnahme 107 gegenüber der Spindel 106 ein (nicht dargestelltes) Futter der Werkzeugaufnahme 107 geöffnet und/oder geschlossen werden. Beispielsweise handelt es sich um ein Schnellspannbohrfutter, ein SDS-Bohrfutter und/oder ein TE-C-Borfutter. Mittels der Werkzeugaufnahme 107 ist das Werkzeug 108 beispielsweise rotierend und/oder schlagend und/oder hämmernd antreibbar.

Der Elektromotor 102 ist beispielsweise ein bürstenloser Gleichstrommotor. Der Elektromotor 102 ist zum Erzeugen eines Drehmoments zwischen dem Stator 103 und dem Rotor 104 betreibbar. Eine Steuervorrichtung 111 ist dazu konfiguriert, auf eine Betätigung eines Betätigungselements 110 hin einen elektrischen Stromfluss von einer Stromquelle 112 zu dem Stator 103 zu schalten. Die Stromquelle 112 ist vorzugweise ein Akkumulator oder eine Schaltung mehrerer Akkumulatoren, sie kann aber auch ein Netzteil sein.

Beispielsweise ist die Steuervorrichtung 111 dazu eingerichtet, eine Rotationslage (Rotationswinkel und/oder Winkelgeschwindigkeit) des Rotors 104 relativ zu dem Gehäuse 101 mittels einer Hallsensorschaltung 113 zu erfassen. Beispielsweise ist die Steuervorrichtung 111 weiterhin dazu eingerichtet, (in Fig. 1 nicht dargestellte) Wicklungen des Stators 103 mit elektrischem Strom zu beaufschlagen. Die Steuervorrichtung 111 hat dazu beispielsweise eine Auswertelogik, und sie kann beispielsweise zum Ausführen eines Computerprogramms eingerichtet sein, dessen Befehle die Steuervorrichtung 111 dazu bringen, ein Verfahren zum Betreiben der mobilen Werkzeugmaschine 100 auszuführen.

Die Werkzeugmaschine 100 kann darüber hinaus eine oder mehrere Komponenten umfassen, die als erste loT-Geräte 114 ausgestaltet sind und damit Teil eines übergeordneten digitalen Ökosystems sein können. Beispielsweise kann die Steuervorrichtung 111 mit drahtloser Kommunikationstechnik ausgerüstet sein und als erstes loT-Gerät 114 fungieren, das Betriebszustände der Werkzeugmaschine 100 erfasst, analysiert und an externe Systeme überträgt. Ebenso kann die Hallsensorschaltung 113 als eigenständiges, vernetzbares loT-Sensormodul betrieben werden, das Messdaten zur Rotationslage bereitstellt. Auch die Stromquelle 112, insbesondere wenn sie über ein intelligentes Energiemanagement verfügt, kann als erstes loT-fähiges Gerät 114 ausgestaltet sein. Die ersten loT-Geräte 114 sind vorzugsweise auf einen energieeffizienten Betrieb optimiert und arbeiten besonders bevorzugt autonom, etwa über Batterien oder Akkumulatoren, ohne kontinuierliche Verbindung zu einem Netzwerk. Wenn die Stromquelle 112 als Batterie bzw. Akkumulator ausgeführt ist, kann auch diese Batterie bzw. der Akkumulator als erstes loT-Gerät 114 ausgebildet sein. Ferner können die zuvor genannten Komponenten auch zumindest teilweise als zweite loT-Geräte 115 ausgebildet sein, durch die - ähnlich zu einem Gateway 116 - eine Zeitaktualisierung von ersten loT-Geräten ermöglicht wird. Beispielsweise kann die Steuervorrichtung 111 als zweites loT-Gerät 115 ausgebildet sein. Dies stellt besondere Anforderungen an eine präzise und dennoch ressourcenschonende Zeitaktualisierung dieser Komponenten, insbesondere dann, wenn sie nur zeitweise mit einem Netzwerk verbunden sind oder vollständig offline arbeiten. Die Zeitdaten der jeweiligen ersten loT-Geräte 114 können mithilfe des Gateways 116 oder mithilfe mindestens des zweiten loT-Geräts 115 aktualisiert bzw. synchronisiert werden, was im Nachfolgenden anhand von Flussdiagrammen und Ablaufbildern noch näher zu erläutern ist.

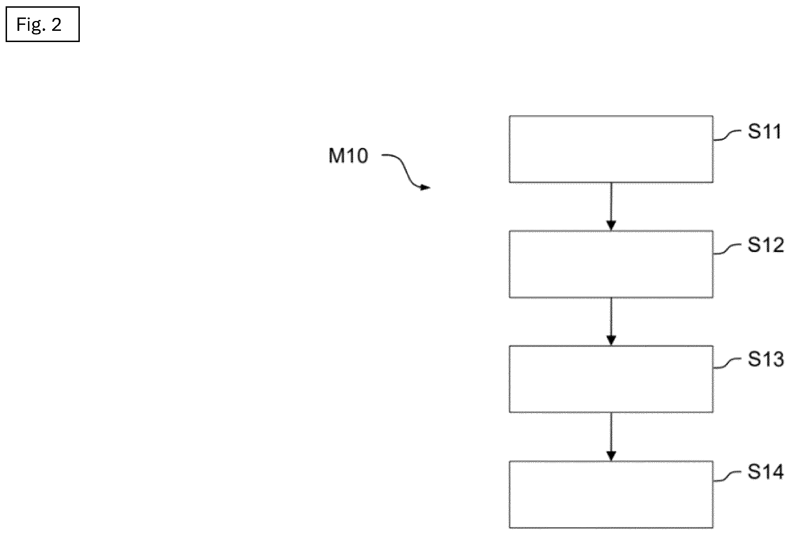

Fig. 2 zeigt ein schematisches Flussdiagramm eines übergeordneten Ausführungsbeispiels des vorliegenden Verfahrens M10 zum Aktualisieren von Zeitdaten des mindestens einen loT-Geräts 114 der Werkzeugmaschine 100 durch ein Gateway 116 oder eines zweiten loT-Geräts 115 der Werkzeugmaschine 100. Das mindestens erste loT-Gerät 114 der mobilen Werkzeugmaschine 100 und das Gateway 116 und alternativ oder ergänzend das zweite loT-Gerät 115 bilden ein System 117.

In einem Schritt S11 erfolgt ein Bereitstellen des ersten loT-Geräts 114 und des Gateways 116 oder des ersten loT-Geräts 114 und des zweiten loT-Geräts 115.

In einem Schritt S12 erfolgt ein Empfangen eines ersten loT-Geräte-Beacons 118, das Zeitdaten des ersten loT-Geräts 114 umfasst, durch das Gateway 116 oder das zweite loT-Gerät 115 oder Empfangen eines Gateway-Beacons 119, das Zeitdaten des Gateways 116 umfasst, oder eines zweiten loT-Geräte-Beacons, das Zeitdaten des zweiten loT-Geräts 115 umfasst, durch das erste loT-Gerät 114.

In einem Schritt S13 erfolgt ein Vergleichen der Zeitdaten des ersten loT-Geräts 114 mit den Zeitdaten des Gateways 116 oder den Zeitdaten des zweiten loT-Geräts 115 unter Verwendung eines Vergleichskriteriums, um festzustellen, ob eine Aktualisierung der Zeitdaten des ersten loT-Geräts 114 notwendig ist.

In einem Schritt S14 erfolgt ein Aktualisieren der Zeitdaten des ersten loT-Geräts 114 unter Verwendung der Zeitdaten des Gateways 116 oder der Zeitdaten des zweiten loT-Geräts 115.

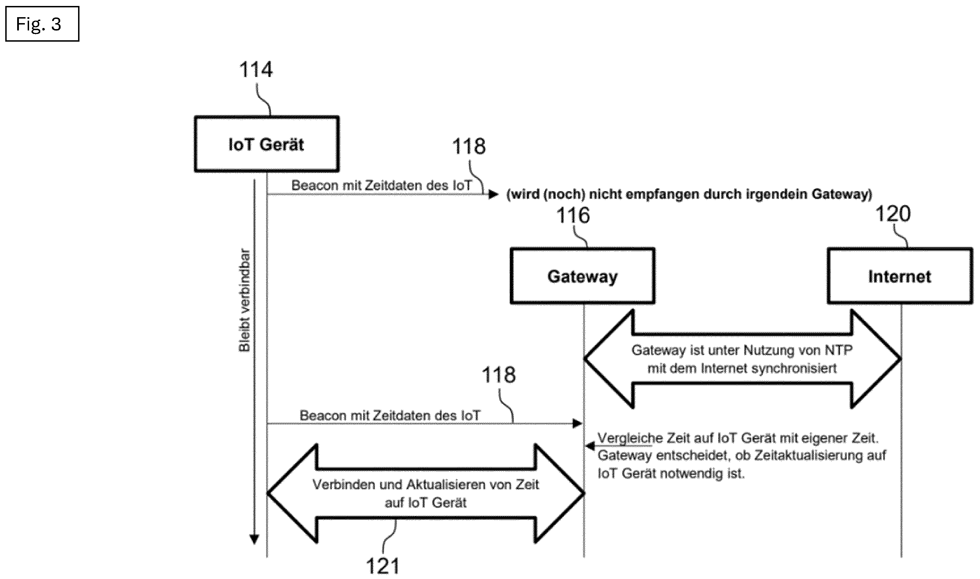

Fig. 3 zeigt, dass das Gateway 116 eine permanente oder zumindest temporäre Internetverbindung 120 aufweisen kann. Die Zeitdaten des Gateways 116 werden unter Verwendung der Internetverbindung 120 mittels eines Standardprotokolls, wie zum Beispiel NTP, mit einer externen Zeitquelle synchronisiert. Es ist Zeit für die Synchronisierung mit dem Internet, entweder über eine permanente oder eine temporäre Verbindung, wann immer das Gerät dies entscheidet. Gemäß Fig. 3 ist das erste loT-Gerät 114 stets mit dem Gateway 116 verbindbar. Das erste loT-Gerät 114 sendet seine aktuellen Zeitdaten in den ersten IoT-Geräte-Beacons 118 an das Gateway 116. Das Gateway 116 erkennt vorzugsweise, dass die Zeitdaten des ersten loT-Geräts 114 nicht synchron mit den eigenen Zeitdaten sind. Das Vergleichskriterium ist beispielsweise ein Schwellenwert einer Zeitdifferenz zwischen der Uhrzeit des ersten loT-Geräts 114 und des Gateways 116. Die Zeitdifferenz kann beispielsweise deutlich niedriger als der gesetzte Schwellenwert sein oder den gesetzten Schwellenwert überschreiten, z. B. wenn die Differenz weniger als 30 Sekunden beträgt. Das Gateway 116 entscheidet dann, dass die Zeit auf diesem loT-Gerät 114 aktualisiert werden muss. Hierzu verbindet sich das erste loT-Gerät 114 mit dem Gateway 116 über eine drahtlose Verbindung 121. Das Gateway 116 aktualisiert dann die Zeitdaten des ersten loT-Geräts 114 gemäß den Zeitdaten des Gateways 116 über die drahtlose Verbindung 121. Nach der Aktualisierung kann die Verbindung 121 getrennt werden. Die drahtlose Verbindung 121 kann beispielsweise eine Bluetooth-LE-Verbindung aufweisen.

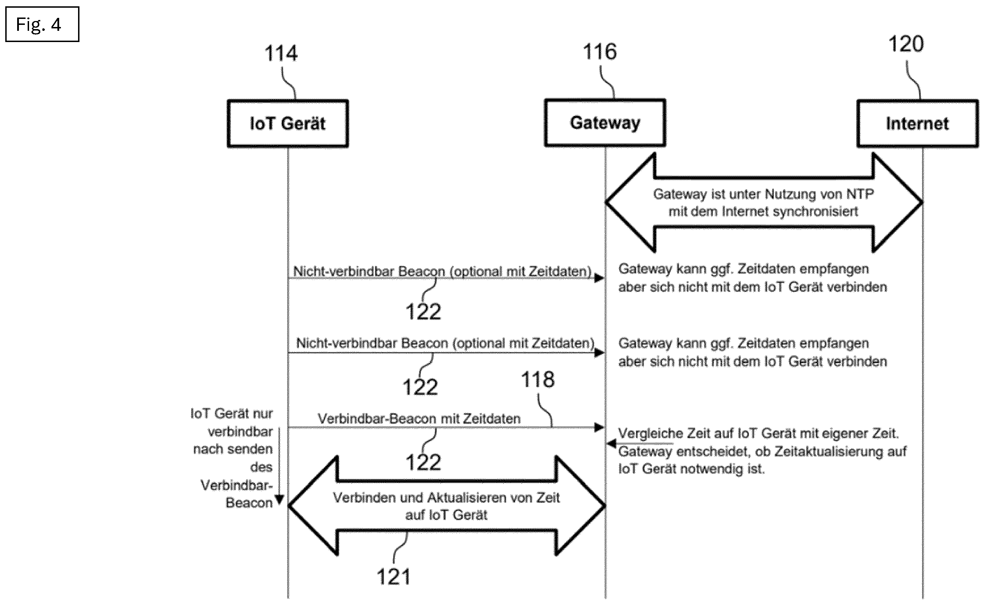

Fig. 4 zeigt ein Ausführungsbeispiel des Verfahrens M10, bei dem das erste loT-Gerät 114 ferner Verbindungsstatus-Beacons 122 sendet, die angeben, ob das erste loT-Gerät 114 mit dem Gateway 116 aktuell verbindbar oder nicht-verbindbar ist. Das Aktualisieren der Zeitdaten des ersten loT-Geräts 114 unter Verwendung der Zeitdaten des Gateways 116 ist nur möglich, wenn ein betreffendes Verbindungsstatus-Beacon 122 angibt, dass das erste loT-Gerät 114 aktuell mit dem Gateway 116 verbindbar ist. Die Verbindungsstatus-Beacons 122 werden vorzugsweise von dem ersten loT-Gerät 114 fortlaufend oder wiederkehrend oder intervallweise oder periodisch oder gemäß einem vorbestimmten Zeitraum oder gemäß einer Jahreszeit oder gemäß einer Umgebungstemperatur gesendet. Die Verbindungsstatus-Beacons 122 können ferner die Zeitdaten des ersten loT-Geräts 114 aufweisen. Fig. 4 zeigt somit eine Erweiterung zu Fig. 3 bezüglich der Energieverwaltung des ersten loT-Geräts 114.

Dabei sendet das erste loT-Gerät 114 vorzugsweise zunächst zweimalig ein "nicht-verbindbar" Beacon mit optionalen Zeitdaten. Darauffolgend sendet das erste loT-Gerät 114 ein "verbindbar" Beacon mit den Zeitdaten des ersten loT-Geräts 114. Daraufhin kann das Gateway 116 eine Verbindung zum ersten loT-Gerät 114 herstellen und dessen Zeitdaten aktualisieren. Anschließend wird von dem ersten loT-Gerät beispielsweise ein aktualisiertes erstes loT-Geräte-Beacon mit aktualisierten Zeitdaten gesendet (in Fig. 4 nicht dargestellt).

So können energieoptimierte erste loT-Geräte 114 entscheiden, dass sie nicht immer eine Verbindung herstellen, sondern eine solche Verbindbarkeit lediglich in vorbestimmten Zeitintervallen erfolgen soll. Dies ist beispielsweise für ein erstes loT-Gerät 114 sinnvoll, das bereits in seinem Stromverbrauch begrenzt ist oder über eine begrenzte Stromquelle verfügt. In diesem Fall ist das Ziel, so viel Energie wie möglich einzusparen, was durch die nicht ständige Verbindbarkeit erreicht wird.

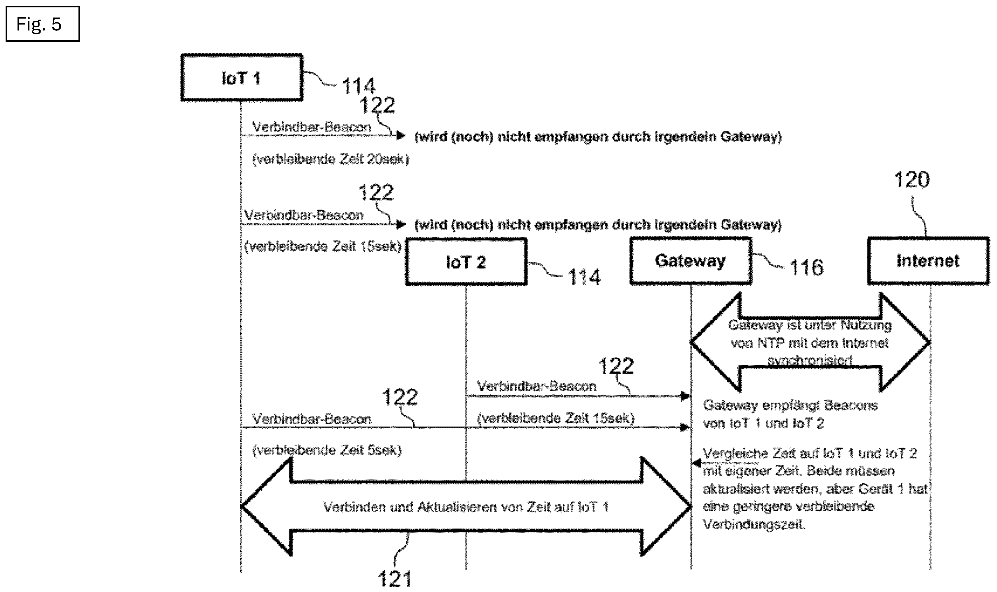

Fig. 5 zeigt ein Beispiel, bei dem mehrere erste loT-Geräte 114 (in Fig. 5 IoT 1 und loT 2) mit dem Gateway 116 verbindbar sind und sich in Reichweite des Gateways 116 befinden. Die mehreren ersten loT-Geräte 114 erfordern ggf. jeweils eine Zeitaktualisierung. Die mehreren ersten loT-Geräte 114 befinden sich ggf. für unterschiedliche Restzeiten in einem "verbindbar" Modus (angezeigt über die jeweiligen Verbindungsstatus-Beacons 122). Das Gateway 116 kann dann die Aktualisierung der Zeitdaten des jeweiligen ersten loT-Geräts 114 bei Vorhandensein von mehreren ersten loT-Geräten 114 gemäß einem Priorisierungskriterium durchführen, insbesondere wenn die mehreren ersten loT-Geräte 114 zeitgleich zu aktualisieren sind. Das Priorisierungskriterium auf Basis eines Zeitdifferenzabgleichs zwischen den mehreren ersten loT-Geräten 114 und dem Gateway 116, oder auf Basis einer jeweils verbleibenden Verbindungszeit der mehreren ersten loT-Geräte 114 mit Gateway (wie in Fig. 5 gezeigt), oder auf Basis eines Received Signal Strength Indicators, der in den Verbindungsstatus-Beacons 122 umfasst ist, erfolgen. Gemäß Fig. 5 gibt das loT 2 beispielsweise mit dem Verbindungsstatus-Beacon 122 an, dass es noch 15 Sekunden lang verbindungsfähig bleibt. Das loT 1 gibt hingegen an, dass es noch für fünf Sekunden verbindungsfähig bleibt. Das Gateway 116 entscheidet in diesem Fall, dass zuerst eine Verbindung zu dem loT 1 hergestellt werden soll, das nur noch fünf Sekunden Zeit hat, damit die Zeitdaten auf dem IoT 1 noch aktualisiert werden können.

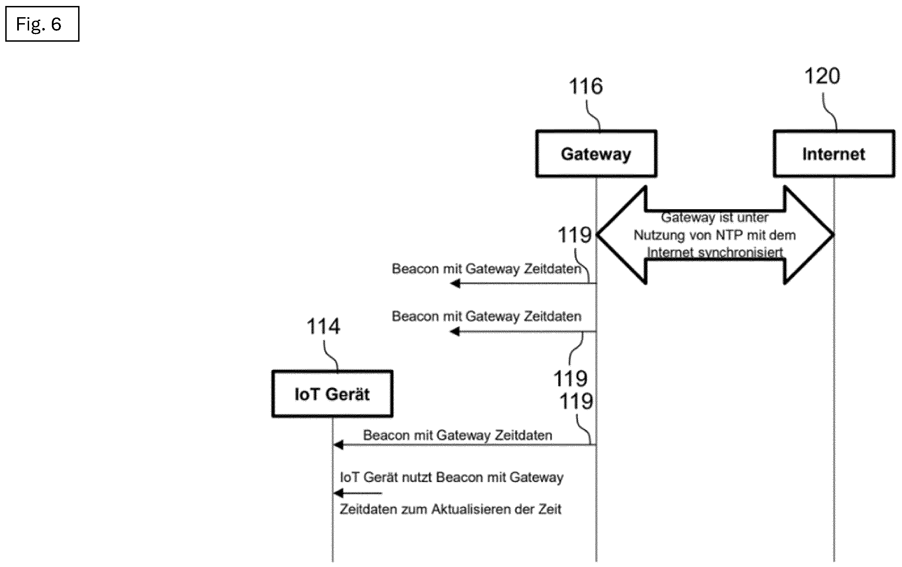

Fig. 6 zeigt einen Fall, bei dem das erste loT-Gerät 114 keine Verbindung zum Gateway 116 herstellen muss. Das Gateway 116 teilt über die Gateway-Beacons 119 seine Zeitdaten mit. Das erste loT-Gerät 114 kann diese Zeitdaten des Gateways 116 empfangen und nutzen, um seine eigenen Zeitdaten gemäß den Gateway-Zeitdaten zu aktualisieren. Hierzu kann das erste loT-Gerät 114 seine eigenen Zeitdaten mit den Gateway-Zeitdaten vergleichen. Wenn eine Aktualisierung erforderlich ist, kann das erste loT-Gerät diese Aktualisierung selbst anhand der in dem Gateway-Beacon 119 umfassten Zeitdaten des Gateways 116 durchführen, ohne dass sich das erste loT-Gerät 114 mit dem Gateway 116 verbinden.

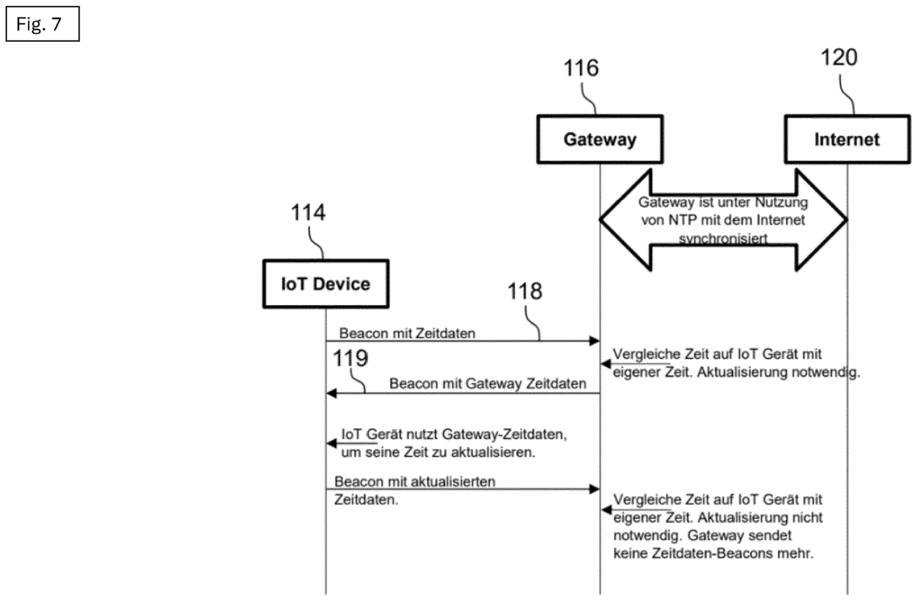

Fig. 7 zeigt einen Fall, bei dem das erste loT-Gerät 114 zunächst einen ersten loT-Geräte-Beacon 118 an das Gateway 116 sendet. Das Gateway 116 führt den Vergleich der Zeitdaten des ersten loT-Geräts 114 und des Gateways 116 durch, und sendet im Falle eines Aktualisierungsbedarfs einen Gateway-Beacon 119 an das erste loT-Gerät 114. Das erste loT-Gerät 114 nutzt dann die Gateway-Zeitdaten, um seine Zeitdaten zu aktualisieren. Darauffolgend kann das erste loT-Gerät 114 einen Beacon mit aktualisierten Zeitdaten an das Gateway 117 zurücksenden. Auch in diesem Fall ist keine Verbindung zur Zeitaktualisierung zwischen dem ersten loT-Gerät 114 und dem Gateway 116 erforderlich.

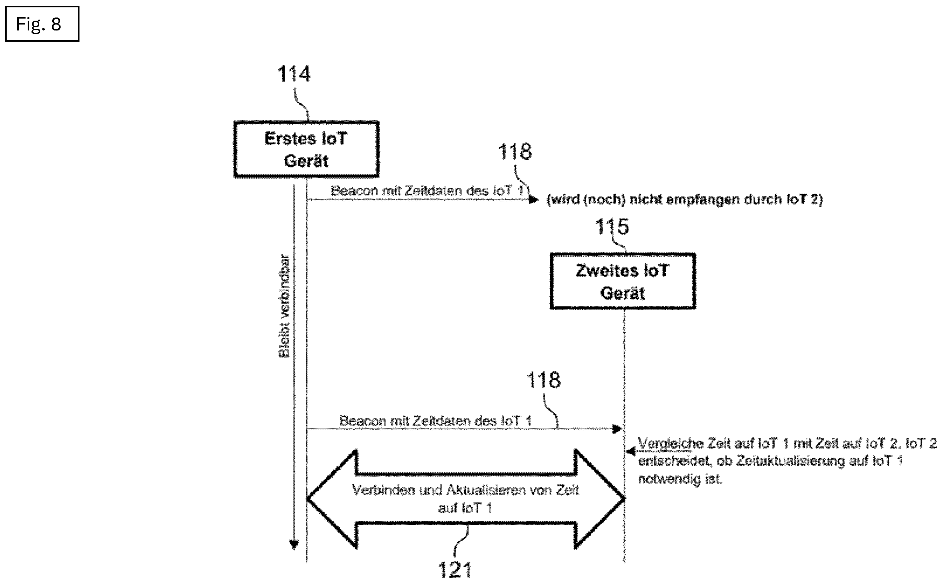

Fig. 8 entspricht vom Aufbau her grundsätzlich Fig. 3. Allerdings wird zur Zeitaktualisierung des ersten loT-Geräts 114 anstelle des Gateways das zweite loT-Gerät 115 verwendet. Das zweite loT-Gerät 115 ist dabei nicht mit dem Internet verbunden, kann aber ansonsten im Wesentlichen die Funktionen zur Zeitaktualisierung des ersten loT-Geräts 114 übernehmen.

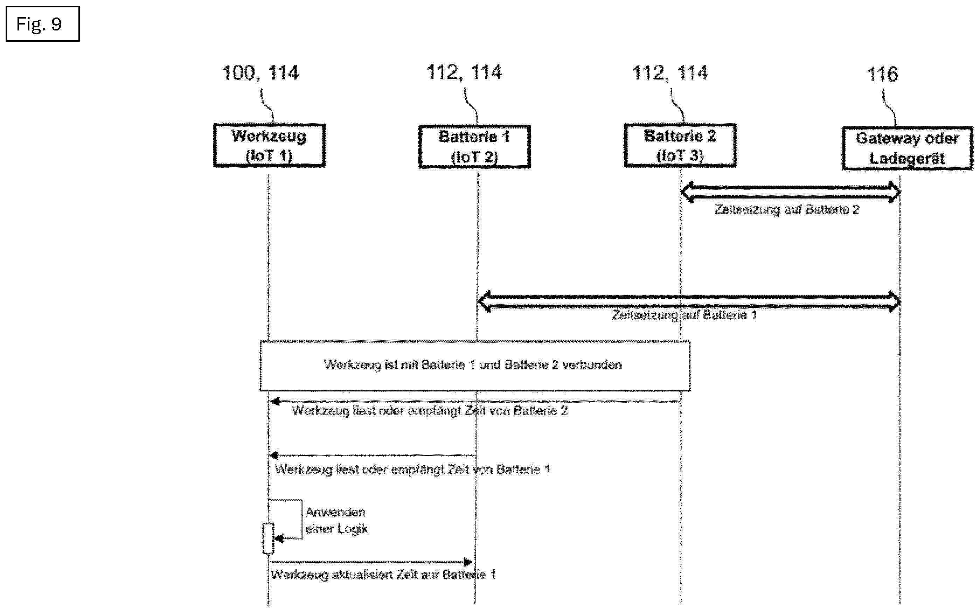

Wie in Fig. 9 gezeigt, kann die mobile Werkzeugmaschine 100 vorzugsweise gleichzeitig mit mehreren Batterien 123, 124 verbunden sein, die als die Stromquelle 112 fungieren. Die Verbindung kann dabei sowohl drahtlos als auch kabelgebunden erfolgen. In diesem Fall liest die mobile Werkzeugmaschine 100 vorzugsweise die Zeitinformationen aller angeschlossenen Batterien 123, 124 aus und wendet vorzugsweise ein Auswahlkriterium bzw. eine Logik 125 an, beispielsweise die Verwendung der Zeit jener Batterie 123, 124 mit der höchsten Taktgenauigkeit, um eine geeignete Referenzzeit zu bestimmen. Vorzugsweise nutzt die mobile Werkzeugmaschine 100 diese ausgewählte Zeit, um seine eigene interne Uhr zu aktualisieren und zusätzlich auch die Uhren weiterer angeschlossener Batterien (nicht explizit gezeigt) entsprechend zu synchronisieren. Auf diese Weise wird vorzugsweise eine konsistente Zeitsynchronisation im gesamten System erreicht, selbst bei komplexen Kopplungskonstellationen. Wie aus Fig. 9 ferner hervorgeht, dass das Gateway 116 die Zeit auf der jeweiligen Batterie 123, 124 einstellen, indem eine der vorliegend vorgeschlagenen Verfahren verwendet wird. Dies kann die Verwendung eines drahtlosen Beacons 118, 119 oder eines kabelgebundenen Beacons 118, 119 während eines Ladevorgangs aufweisen. Die mobile Werkzeugmaschine 100 kann vorzugsweise die Zeit der jeweiligen Batterie 123, 124 lesen oder seine eigene Zeit an die jeweilige Batterie 123, 124 senden. Die mobile Werkzeugmaschine 100 kann auch die Zeit auf der Batterie 123 aktualisieren, beispielsweise wenn die mobile Werkzeugmaschine 100 zuvor ihre eigene Zeit auf Basis der Zeit von Batterie 124 aktualisiert hat. Die mobile Werkzeugmaschine 100 kann auch die Zeit auf der Batterie 124 aktualisieren, beispielsweise wenn die mobile Werkzeugmaschine 100 zuvor ihre eigene Zeit auf Basis der Zeit von Batterie 123 aktualisiert hat. Dadurch wird erreicht, dass die Batterien 123, 124 dieselbe Zeit aufweisen. Die mobile Werkzeugmaschine 100 kann auch nur ihre eigene Zeit oder die Zeit einer angeschlossenen Batterie 123, 124 aktualisieren, beispielsweise wenn eine Zeitdifferenz innerhalb eines vorbestimmten Grenzwertes ist.

Obwohl die vorliegende Erfindung anhand von Ausführungsbeispielen beschrieben wurde, ist sie vielfältig modifizierbar.

### BEZUGSZEICHENLISTE

- 100: mobile Werkzeugmaschine
- 101: Gehäuse
- 102: Elektromotor
- 103: Stator
- 104: Rotor
- 105: Getriebe
- 106: Spindel
- 107: Werkzeugaufnahme
- 108: Werkzeug
- 109: Griff
- 110: Betätigungselement
- 111: Steuervorrichtung
- 112: Stromquelle
- 113: Hallsensorschaltung
- 114: erstes loT-Gerät
- 115: zweites loT-Gerät
- 116: Gateway
- 117: System
- 118: erste loT-Geräte-Beacons
- 119: Gateway-Beacons
- 120: Internetverbindung
- 121: drahtlose Verbindung
- 122: Verbindungsstatus-Beacons
- 123: Batterie
- 124: Batterie
- 125: Logik

- M10: Verfahren zum Aktualisieren von Zeitdaten eines loT-Geräts
- S11: Bereitstellen des ersten loT-Geräts
- S12: Empfangen eines Beacons
- S13: Vergleichen von Zeitdaten
- S14: Aktualisieren der Zeitdaten

## Patentansprüche

1. Verfahren (M10) zum Aktualisieren von Zeitdaten eines ersten loT-Geräts (114) einer mobilen Werkzeugmaschine (100) mittels eines Gateways (116) oder eines zweiten loT-Geräts (115) der Werkzeugmaschine (100), das Verfahren (M10) aufweisend die folgenden Schritte:
Bereitstellen (S11) des ersten loT-Geräts (114) und des Gateways (116) oder des ersten loT-Geräts (114) und des zweiten loT-Geräts (115);
Empfangen (S12) eines ersten loT-Geräte-Beacons (118), das Zeitdaten des ersten loT-Geräts (114) umfasst, durch das Gateway (116) oder das zweite loT-Gerät (115) oder Empfangen eines Gateway-Beacons (119), das Zeitdaten des Gateways (116) umfasst, oder eines zweiten loT-Geräte-Beacons, das Zeitdaten des zweiten loT-Geräts (115) umfasst, durch das erste loT-Gerät (114);
Vergleichen (S13) der Zeitdaten des ersten loT-Geräts (114) mit den Zeitdaten des Gateways (116) oder den Zeitdaten des zweiten loT-Geräts (115) unter Verwendung eines Vergleichskriteriums, um festzustellen, ob eine Aktualisierung der Zeitdaten des ersten loT-Geräts (114) notwendig ist; und
Aktualisieren (S14) der Zeitdaten des ersten loT-Geräts (114) unter Verwendung der Zeitdaten des Gateways (116) oder der Zeitdaten des zweiten loT-Geräts (115).

2. Verfahren (M10) nach Anspruch 1, wobei die Zeitdaten des ersten loT-Geräts (114) und/oder des zweiten loT-Geräts (115) eine aktuelle Echtzeituhrzeit des ersten bzw. zweiten loT-Geräts (115) und/oder eine auf dem ersten bzw. zweiten loT-Gerät (114, 115) konfigurierte lokale Zeitzoneninformation aufweisen, und/oder wobei die Zeitdaten des Gateways (116) eine globale Echtzeituhrzeit und/oder eine durch das Gateway (116) bezogene lokale Zeitzoneninformation aufweisen.

3. Verfahren (M10) nach Anspruch 1 oder 2, wobei das Gateway (116) eine permanente oder zumindest temporäre Internetverbindung (120) aufweist, und wobei die Zeitdaten des Gateways (116) unter Verwendung der Internetverbindung (120) mittels eines Standardprotokolls mit einer externen Zeitquelle synchronisiert werden.

4. Verfahren (M10) nach einem der Ansprüche 1 bis 3, wobei das Vergleichen (S13) der Zeitdaten des ersten loT-Geräts (114) mit den Zeitdaten des Gateways (116) oder den Zeitdaten des zweiten loT-Geräts (115) aufweist:
Vergleichen (S13), durch das Gateway (116), der mittels des ersten loT-Geräte-Beacons (118) durch das Gateway (116) empfangenen Zeitdaten des ersten loT-Geräts (114) mit den Zeitdaten des Gateways (116) unter Verwendung des Vergleichskriteriums; oder
Vergleichen (S13), durch das zweite loT-Gerät (115), der mittels des ersten loT-Geräte-Beacons (118) durch das zweite loT-Gerät (115) empfangenen Zeitdaten des ersten loT-Geräts (114) mit den Zeitdaten des zweiten loT-Geräts (115) unter Verwendung des Vergleichskriteriums; oder
Vergleichen (S13), durch das erste loT-Gerät (114), der mittels des Gateway-Beacons (119) von dem ersten loT-Gerät (114) empfangenen Zeitdaten des Gateways (116) mit den Zeitdaten des ersten loT-Geräts (114) unter Verwendung des Vergleichskriteriums; oder
Vergleichen (S13), durch das erste loT-Gerät (114), der mittels des zweiten loT-Geräte-Beacons von dem ersten loT-Gerät (114) empfangenen Zeitdaten des zweiten loT-Geräts (115) mit den Zeitdaten des ersten loT-Geräts (114) unter Verwendung des Vergleichskriteriums.

5. Verfahren (M10) nach einem der vorigen Ansprüche, wobei das Aktualisieren (S14) der Zeitdaten des ersten loT-Geräts (114) durch das erste loT-Gerät (114) unter Verwendung der durch das Gateway-Beacon (119) von dem ersten loT-Gerät (114) empfangenen Zeitdaten des Gateways (116) durchgeführt wird, oder wobei das Aktualisieren der Zeitdaten des ersten loT-Geräts (114) durch das erste loT-Gerät (114) unter Verwendung der durch das zweite loT-Geräte-Beacon von dem ersten loT-Gerät (114) empfangenen Zeitdaten des zweiten loT-Geräts (115) durchgeführt wird.

6. Verfahren (M10) nach einem der Ansprüche 1 bis 4, wobei zum Aktualisieren (S14) der Zeitdaten des ersten loT-Geräts (114) eine zumindest temporäre, drahtlose Verbindung (121) zwischen dem Gateway (116) und dem ersten loT-Gerät (114) hergestellt wird, und wobei das Aktualisieren (S14) der Zeitdaten des ersten loT-Geräts (114) durch das Gateway (116) unter Verwendung der Zeitdaten des Gateways (116) durch Nutzung der zumindest temporären, drahtlosen Verbindung (121) durchgeführt wird.

7. Verfahren (M10) nach Anspruch 6, wobei die zumindest temporäre, drahtlose Verbindung (121) zwischen dem Gateway (116) und dem ersten loT-Gerät (114) nach dem Aktualisieren der Zeitdaten des ersten loT-Geräts (114) getrennt wird.

8. Verfahren (M10) nach einem der vorigen Ansprüche, wobei das erste loT-Gerät (114) Verbindungsstatus-Beacons (122) sendet, die angeben, ob das erste loT-Gerät (114) mit dem Gateway (116) aktuell verbindbar oder nicht-verbindbar ist, und wobei das Aktualisieren der Zeitdaten des ersten loT-Geräts (114) unter Verwendung der Zeitdaten des Gateways (116) nur möglich ist, wenn ein Verbindungsstatus-Beacon (122) angibt, dass das erste loT-Gerät (114) aktuell mit dem Gateway (116) verbindbar ist.

9. Verfahren (M10) nach einem der vorigen Ansprüche, wobei die Verbindungsstatus-Beacons (122) von dem ersten loT-Gerät (114) fortlaufend oder wiederkehrend oder intervallweise oder periodisch oder gemäß einem vorbestimmten Zeitraum oder gemäß einer Jahreszeit oder gemäß einer Umgebungstemperatur gesendet werden.

10. Verfahren (M10) nach Anspruch 9, wobei die Verbindungsstatus-Beacons (122) die Zeitdaten des ersten loT-Geräts (114) aufweisen.

11. Verfahren (M10) nach einem der vorigen Ansprüche, wobei die Aktualisierung der Zeitdaten des ersten loT-Geräts (114, IoT 1, loT 2) bei Vorhandensein von mehreren ersten loT-Geräten (114, IoT 1, loT 2) gemäß einem Priorisierungskriterium durchgeführt wird, insbesondere, wenn die mehreren ersten loT-Geräte (114, loT 1, loT 2) zeitgleich zu aktualisieren sind.

12. Verfahren (M10) nach Anspruch 11, wobei das Priorisierungskriterium auf Basis eines Zeitdifferenzabgleichs zwischen den mehreren ersten loT-Geräten (114, loT 1, IoT 2) und dem Gateway (116) oder den mehreren ersten loT-Geräten (114, loT 1, loT 2) und dem zweiten loT-Gerät (115), oder auf Basis einer jeweils verbleibenden Verbindungszeit der mehreren ersten loT-Geräte (114, IoT 1, IoT 2) mit dem Gateway (116), oder auf Basis einer jeweils verbleibenden Verbindungszeit der mehreren ersten loT-Geräte (114, IoT 1, loT 2) mit dem zweiten loT-Gerät (115), oder auf Basis eines Received Signal Strength Indicators, der in den jeweiligen Verbindungsstatus-Beacons (122) umfasst ist, erfolgt.

13. Verfahren (M10) nach einem der vorigen Ansprüche, wobei das erste loT-Geräte-Beacon (118) und/oder zweite loT-Geräte-Beacon als Rundfunksignal ausgebildet ist oder wobei das Gateway-Beacon (119) als Rundfunksignal ausgebildet ist.

14. System (117) zum Aktualisieren von Zeitdaten eines ersten loT-Geräts (114) einer mobilen Werkzeugmaschine (100) mittels eines Gateways (116) oder eines zweiten loT-Geräts (115) der Werkzeugmaschine (100), das System (117) aufweisend:
das erste loT-Gerät (114) der mobilen Werkzeugmaschine (100); und
das Gateway (116) oder das zweite loT-Gerät (115);
wobei das Gateway (116) oder das zweite loT-Gerät (115) dazu ausgebildet ist, ein erstes loT-Geräte-Beacon (118), das Zeitdaten des ersten loT-Geräts (114) umfasst, zu empfangen, oder wobei das erste loT-Gerät (114) dazu ausgebildet ist, ein Gateway-Beacon (119), das Zeitdaten des Gateways (116) umfasst, oder ein zweites loT-Geräte-Beacon, das Zeitdaten des zweiten loT-Geräts (115) umfasst, zu empfangen;
wobei das erste loT-Gerät (114) oder das Gateway (116) dazu ausgebildet ist, die Zeitdaten des ersten loT-Geräts (114) mit den Zeitdaten des Gateways (116) unter Verwendung eines Vergleichskriteriums zu vergleichen, um festzustellen, ob eine Aktualisierung der Zeitdaten des ersten loT-Geräts notwendig ist, oder wobei das erste loT-Gerät (114) oder das zweite loT-Gerät (115) dazu ausgebildet ist, die Zeitdaten des ersten loT-Geräts (114) mit den Zeitdaten des zweiten loT-Gerätes unter Verwendung eines Vergleichskriteriums zu vergleichen, um festzustellen, ob eine Aktualisierung der Zeitdaten des ersten loT-Geräts (114) notwendig ist; und
wobei das erste loT-Gerät (114) dazu ausgebildet ist, die Zeitdaten des ersten loT-Geräts (114) unter Verwendung der Zeitdaten des Gateways (116) oder der Zeitdaten des zweiten loT-Geräts (115) zu aktualisieren, oder wobei das Gateway (116) dazu ausgebildet ist, die Zeitdaten des ersten loT-Geräts (114) unter Verwendung der Zeitdaten des Gateways (116) zu aktualisieren.

15. System (117) nach Anspruch 14, wobei das erste und/oder das zweite loT-Gerät (114, 115) als mobile Werkzeugmaschine (100) und/oder als Komponente (111, 112, 113) einer mobilen Werkzeugmaschine (100) ausgebildet ist/sind.
